(19) Europäisches Patentamt
European Patent Office
Office européen des brevets

(11) EP 0 907 073 A1

## (12) EUROPEAN PATENT APPLICATION

(43) Date of publication:
07.04.1999 Bulletin 1999/14

(51) Int Cl.6: G01M 11/00

(21) Application number: 98307663.9

(22) Date of filing: 22.09.1998

(84) Designated Contracting States:
AT BE CH CY DE DK ES FI FR GB GR IE IT LI LU MC NL PT SE
Designated Extension States:
AL LT LV MK RO SI

(30) Priority: 02.10.1997 GB 9720980

(71) Applicant: Furukawa Electric Europe Ltd.
London SW7 5BW (GB)

(72) Inventors:
- Li, Luksun
Newbury, Berkshire RG14 2SF (GB)
- Chen, Yuehua
Thatcham, Berkshire RG18 4BQ (GB)
- Palmer, Julian Charles Biman
Ryde, Isle of Wight PO33 3AQ (GB)

(74) Representative: Hackney, Nigel John et al
Mewburn Ellis,
York House,
23 Kingsway
London WC2B 6HP (GB)

# (54) Optical fibre sensing apparatus for distributed sensing using BOTDR

(57) The current invention is applicable to an optical fibre based distributed sensing system that operates according to the non-linear process of Stimulated Brillouin Scattering (SBS). Such a sensing system that is based upon the Brillouin Optical Time Domain Analysis (BOTDA) technique relies upon the interaction between two lightwaves that have an optical frequency difference that lies in the microwave region. It is important that this frequency difference is tunable and stable, and that at least one of the lightwaves can be pulsed. The current invention describes a system that is capable of achieving these objectives, and can launch both lightwaves into one end of a single optical fibre (that operates as the distributed sensing medium) with minimum loss.

FIG. 2

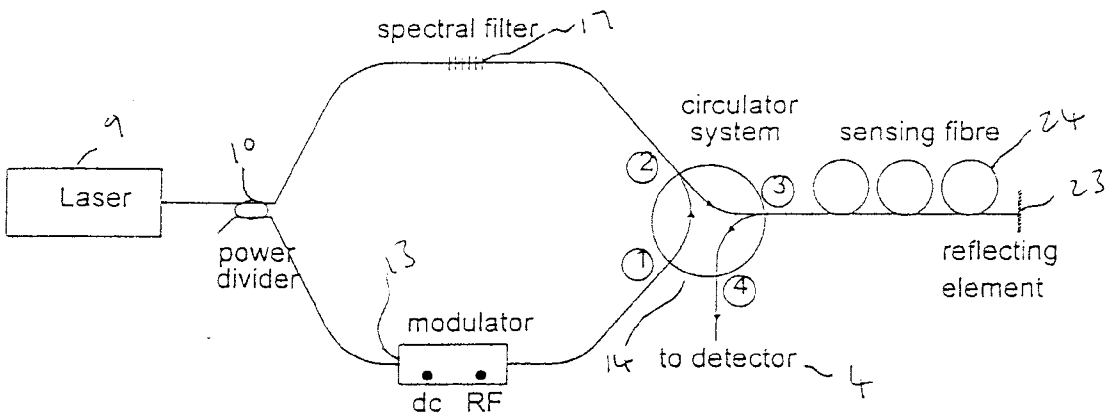


EP 0 907 073 A1

## Description

This invention relates to a distributed sensing apparatus. Particularly, the invention relates to an apparatus for measuring characteristics, e.g. temperature or strain in an optical fibre.

There is currently much interest in the use of Stimulated Brillouin Scattering (SBS) as a mechanism to realise a distributed sensor that can detect strain and temperature variations along an optical fibre with a range of several tens of kilometres. There exists more than one configuration according to which SBS sensors can be designed; the current invention uses a sensing system that is based on Brillouin Optical Time Domain Analysis (BOTDA). This design and the important technical details of SBS are described below.

SBS is a non-linear optical effect that occurs in an optical fibre when the power contained within a highly coherent lightwave propagating along the fibre is sufficient to create, via the process of electrostriction, a coherent acoustic travelling wave in the fibre. (SBS also occurs in bulk media, but in a manner unsuitable for distributed sensing). The lightwave is partially scattered by the acoustic wave in the opposite direction to its original direction of propagation along the fibre, and is simultaneously down/shifted in frequency by an amount $\nu_B$, known as the Brillouin frequency shift. The value of $\nu_B$ is calculated as:

$$\nu_B = 2nV_A / \lambda$$

where n is the average refractive index of the fibre core, $V_A$ is the acoustic wave velocity and $\lambda$ is the wavelength of the lightwave.

The value of $V_A$ is dependent upon the temperature and strain experienced by the fibre, yielding a Brillouin frequency shift dependent upon these two parameters. In a typical fibre system operating at 1.55µm, $\nu_B$ has a value of approximately 10.8GHz. It is through the measurement of this Brillouin frequency shift, $\nu_B$, that SBS can be used as a mechanism for distributed sensing.

The occurrence of SBS is subject to the input power of the lightwave reaching a threshold value $P_{th}$, dependent upon lightwave polarisation state, fibre core area, fibre attenuation, fibre length and peak possible Brillouin gain. Furthermore, it is important that the linewidth of the lightwave is extremely narrow. It is possible for up to 60% of the input optical power to be back-scattered when stimulated Brillouin scattering occurs.

Thus a lightwave of sufficiently high power and narrow linewidth effects the creation, by the SBS process, of a secondary lightwave that propagates in the reverse direction and is down-shifted in frequency with respect to the primary (original) lightwave. Alternatively, if the secondary lightwave previously exists in the fibre, it will be amplified by the primary lightwave in a process known as Brillouin gain. The primary lightwave experiences Brillouin loss, as the power it contains is coupled to the secondary lightwave. The secondary lightwave will experience maximum Brillouin gain when its frequency is less than that of the primary lightwave's frequency by exactly the Brillouin frequency shift, $\nu_B$. If the frequency difference between the two lightwaves is slightly removed from this value, the Brillouin gain experienced by the secondary lightwave will be reduced.

In effect, there exists a Gaussian-shaped Brillouin gain curve, created by the primary lightwave, whose central frequency is down-shifted by exactly $\nu_B$ from the primary lightwave frequency. The 3dB linewidth of the Brillouin gain curve is approximately 30MHz at 1.55µm. The primary (higher frequency) lightwave is commonly referred to as the "pump", and the secondary (lower frequency) lightwave as the "probe".

### BOTDA

A BOTDA system is dependent upon the interaction between two lightwaves - the pump and probe - which are arranged to be counter-propagating within the sensing fibre. The strength of the Brillouin interaction between the lightwaves is measured as a function of their frequency difference, and from this information the Brillouin frequency and gain curve profile can be deduced.

In order to achieve spatial resolution, either one or both of the lightwaves must be pulsed; in the most common arrangement, only one of the lightwaves is pulsed, and the interaction power in the cw lightwave is sampled.

A typical set-up is shown in Figure 1. Two separate lasers 101, 102 are situated at opposite ends of the sensing fibre, in order to produce counter-propagating signals in a sensing fibre 103. The frequency of one of the lasers 101 is swept so that their frequency difference covers the range of possible Brillouin frequency values. A signal processing unit 104 and frequency difference measurement unit 105 measure the Brillouin frequency. If the pump is pulsed, then the measured cw probe experiences gain in the interaction, and the system is said to be operating in Brillouin gain mode. Conversely, if the probe is pulsed, then the measured cw pump experiences loss in the interaction, and the system is said to be operating in Brillouin loss mode.

It is generally considered to be impractical to require access to both ends of the sensing fibre, as is the case in Figure 1. At the cost of extra complication of the components at the near end of the fibre, it is possible to arrange counter-propagation of the pump and probe with the requirement for only a single reflecting element at the distal end of the sensing fibre. The current invention is applicable to such a one-ended scheme.

The present invention sets out to provide an improved device wnich is capable of monitoring temperature or strain cheaply an efficiently in an optical sensing fibre.

According to the present invention there is provided a sensing apparatus for sensing a characteristic of an optical fibre including

a laser source for producing a lightwave;
wave production means for producing from the lightwave a pump wave and a probe wave;
frequency sweep means for varying the frequency of one of the pump and probe waves;
direction means for directing both pump and probe waves onto a near end of an optical fibre;
reflection means for reflecting one of the pump and probe waves at a distal end of the optical fibre;
detection means for detecting the Brillouin loss or gain produced by an interaction of the pump and probe waves in the fibre in order to sense a characteristic of the fibre.

The apparatus is applicable to a one-ended BOTDA style fibre based Brillouin distributed sensor. The four major optical components, namely the laser source, the wave production means, the frequency sweep means and the direction means, cooperate to create two lightwaves which act as a pump wave and a probe wave in the distributed sensor.

The frequency difference between the lightwaves may be tuned by the system over a frequency range, e.g. a microwave frequency range, which covers the Brillouin frequency shift (typically 10 - 12GHz for $\lambda = 1.55\mu m$ in standard telecommunications grade optical fibre). Preferably, one of the lightwaves is pulsed in order to obtain spatial information from the measurement. In general, optical amplifiers may be necessary in this system, but the number and position will depend upon the power and loss parameters of the components employed.

Preferably, the wave production means is a power divider, the frequency sweep means is an electro-optic modulator (EOM) and the direction means is a lightwave combination system.

An embodiment of the present invention may include the following components laser source, power divider, spectral filter, electro-optic modulator (EOM) and a lightwave combination system.

The features and/or functions of the components of such a preferred embodiment include the following:

## The Laser Source

The laser acts as the single coherent light source from which both the pump and probe lightwaves are generated. It is advantageous that only one laser is required, since sufficient wavelength stability between two separate lasers can be difficult to achieve. The output wavelength preferably lies in the 1.55μm or 1.3μm region, in order that amplification by Erbium Doped Fibre Amplifier (EDFA) or other fibre pigtailed amplifiers in that wavelength window can be performed. The line width of the laser is preferably narrow, more preferably a few hundred kilohertz or less, to ensure that the Brillouin interaction (which depends upon the coherence, i.e. the line width of the pump lightwave) is maximised.

## The Power Divider

The purpose of the power divider is to split the laser output into two separate lightwaves, one of which will be frequency shifted. In this way, distinct pump and probe lightwaves are created. Preferably the power divider is polarisation maintaining if the light source output is linearly polarised due to the presence of preferably polarisation dependent components later in he system which become less effective as the linearity and alignment of the polarisation state of the incoming light waves decreases. The required splitting ratio of the power divider is dependent upon laser output power, EDFA gain and the insertion loss of the EOM.

## The Electro-Optic Modulator (EOM)

The EOM is responsible for the pulsing and frequency tuning of one of the lightwaves. The efficiency of its operation is polarisation dependent, and preferably requires a linearly polarised input state parallel to the PM fibre slow axis; hence the preference for the preceding power divider to be polarisation maintaining.

Preferably the operation of the EOM is biased to minimum throughput (set either internally, or via an external bias port) so that no optical power is able to pass through unless a modulation signal is applied.

Upon the application of a sinusoidal modulation signal to the EOM, output components are created which are shifted to both a higher and lower frequency with respect to the input lightwave. The frequency shift being exactly the same as the applied modulation frequency (higher order frequency components are also introduced, but are generally too weak to be significant). For example, an applied modulation of 11Ghz will produce frequency tuned sidebands at ±11Ghz, one of which can be eliminated with an appropriate spectral filter. These sidebands are only present for as long as the modulation signal is applied; in the absence of modulation, no optical signal is output. Therefore pulsing can be achieved by gating the microwave signal.

It is preferable to select an EOM with a bandwidth sufficient to cover the required microwave frequency tuning range. Preferably the magnitude of the frequency shift is swept through a range of frequencies which contains the Brillouin loss/gain curve of the sensing fibre.

## The Spectral Filter

The spectral filter eliminates the unwanted frequency sideband created by the EOM. If the higher frequency sideband is eliminated, then the system will operate in Brillouin loss mode and the remaining pulsed wave is known as the probe lightwave. Conversely, elimination of the lower frequency sideband will cause the system to operate in Brillouin gain mode and the remaining pulse is known as the pump lightwave. The spectral response of the filter in reflection and transmission must be highly specified.

The filter preferably reflects the desired sideband wavelength. Furthermore, if the filter transmits the laser wavelength, this would allow it to be situated such that the CW laser wavelength approaches the filter from one side and the pulsed modulated lightwaves approach it from the opposite side. The result of this arrangement is that the CW laser wavelength is not impeded and the desired sideband wavelength is reflected. Thus, both the CW laser wavelength and the desired sideband wavelength travel in the same direction after interaction with the spectral filter. Alternatively, the filter can be situated such that the CW laser wavelength does not pass through it. In this case it would not be necessary for the filter to transmit the laser wavelength.

The separation of the CW laser wavelength and the desired sideband wavelength is approximately 0.09nm (equivalent to 11Ghz at 1.55µm).

Where the pulsed modulated lightwave is the pump lightwave (i.e. a higher frequency than the CW lightwave), the CW lightwave is known as the probe lightwave. Conversely, where the pulsed modulated lightwave is the probe lightwave (i.e. a lower frequency than the CW lightwave), the CM lightwave is known as the pump lightwave.

The spectral filter is preferably a fibre Bragg grating.

## The Lightwave Combination System

The lightwave combination system may be assembled either from two directional couplers or a four port circulator. A four port circulator may be constructed by providing two three port circulators of which a port of the first circulator is connected to a port of the second circulator.

For example, if a four port circulator is used port 1 receives the frequency tuned output pulse from the EOM and re-directs it to exit via port 2, whereupon it is reflected by the spectral filter and re-enters the lightwave combination system via port 2. Preferably the cw laser wavelength (which takes a direct path from the PM power divider) is allowed to pass through the spectral filter and also enters the circulator via port 2. Both lightwaves are then directed to exit the circulator via port 3, entering the sensing fibre. A reflecting element located at the distal end of the sensing fibre reflects the cw lightwave, thus creating the required counter-propagatory condition between the pump-wave and probe-wave.

Alternatively, if two directional couplers are used, the configuration illustrated in Figure 5 can be applied. For example, in use the spectral filter is placed before the lightwave combination system in a location such that it operates only upon the frequency tuned output pulse from the EOM. Port 1 of the first coupler receives the filtered frequency tuned output pulse from the EOM and re-directs it to exit via port 4 of the first coupler, which is connected to port 5 of the second coupler. Preferably the CW laser wavelength (which takes a direct path from the PM power divider) enters port 2 of the first coupler, and is re-directed to exit via port 4 of the first coupler. Hence both lightwaves enter the second coupler via port 5, and are directed to exit the second coupler via ports 7 and 8. The sensing fibre is connected to either port 7 or port 8, depending upon the coupling ratios of the couplers used.

Preferably, a Brillouin interaction occurs in the sensing fibre between the pump and probe lightwaves. The returned cw lightwave modified by the Brillouin interaction in the sensing fibre may then be re-directed to a photo-detector either via port 4 of the circulator, or via port 6 of the second coupler.

Preferably, the strength of the Brillouin interaction experienced by the cw lightwave is measured as a function of time in the manner of a standard optical time domain reflectometer (OTDR).

In a second aspect of the invention, there is provided a method for sensing a characteristic of an optical fibre including producing a lightwave from a laser source, producing from the lightwave a pump wave and a probe wave, varying the frequency of one of the pump wave and the probe wave, directing both pump wave and probe wave into a near end of an optical fibre, reflecting at a distal end of the optical fibre one of the pump wave and probe wave and detecting the Brillouin loss or gain produced by an interaction of the pump and probe waves in the fibre in order to sense a characteristic of the fibre.

The current invention holds several advantages over alternative techniques for achieving the creation of two microwave frequency separated lightwaves of which one is cw and the other pulsed.

The use of a single light source from which to create the pump and probe lightwaves is superior to the use of two separate sources, due to the inherent relative stability of the technique. Small absolute frequency drifts (≤ 1GHz) between two lasers create problems in terms of the speed and stability of relative frequency tuning required to produce an efficient BOTDA sensor. With a single light source small absolute frequency drifts are irrelevant, since the relative frequency drift is always zero.

A simpler variation of the current invention would not include the power divider and would replace the four port circulator in the lightwave combination system with a three port circulator or a single directional coupler, keeping all optical components "in line". However, the ratio of optical power required by the pump and probe lightwaves for optimum operation of the sensor will vary according to the length and attenuation of the sensing fibre. Therefore it is preferable to be able to amplify the lightwaves using erbium doped fibre amplifiers (EDFAs). More preferably, the EDFAs are incorporated in locations not common to both the pump and the probe allowing each lightwave to be amplified separately. The layout of the current invention is therefore preferably such that the pump and probe take non-common routes through the system.

The current invention can be constructed as a one-ended distributed SBS sensor.

A preferred embodiment of the invention will now be described by way of example only and with reference to the accompanying drawings in which:-

Figure 1 is a schematic diagram of a prior art distributed sensor.

Figure 2 is a schematic diagram showing the major components of a distributed sensing device in accordance with the invention.

Figure 3 is a schematic diagram of a distributed sensing device in accordance with the invention incorporated into a BCTDA system.

Figure 4 is a typical result from a distributed BOTDA sensor.

Figure 5 is a configuration of directional couplers according to the further embodiment of the present invention.

Figure 2 shows the basic component of an embodiment of the present invention which is incorporated in Figure 3 and will be described below.

Figure 3 illustrates the components employed in a BOTDA sensor incorporating the present invention, including a microwave driver 1 comprising a microwave function generator 2 and microwave amplifier 3 for the EOM, and a signal processing system 4 comprising a low noise photo detector 5, an oscilloscope 6, an IEEE interface 7 and a computer 8 for processing the received data. A 1.55µm semiconductor laser 9 with around 1mW output power and less than 100kHz line width is coupled to a power divider 10 which is a PM 2x2 coupler. One output signal 12 is directed to the EOM 13, which has a bandwidth of more than 12GHz, and the other output signal 11 is directed towards a spectral filter 17.

Between the EOM 13 and lightwave combination system 14 is an isolator 15 and an EDFA 16. The isolator 15 prevents ASE noise from the amplifier 16 from being fedback to the EOM 13. The lightwave combination system 14 consists of a four port fibre-optic circulator.

The spectral filter 17 is a fibre Bragg grating which is arranged to reflect the longer wavelength pulsed sideband from the EOM output, and to transmit the shorter wavelength sideband. The extinction ratio between the two sidebands is higher than 20dB. In this way the longer wavelength signal pulse is selected and the system operates in Brillouin loss mode.

Between port 2 of the circulator 14 and the fibre Bragg grating 17 are two directionally independent EDFAs 18, 19 which amplify the pulsed lightwave twice, and the cw lightwave 11 once. A manual polarisation controller (PC) 20 and isolator 21 are located between the fibre

Bragg grating 17 and the PM coupler 10. The PC 20 is useful for adjusting the relative input polarisation state of the cw lightwave 11 and the pulsed lightwave 22, upon which the strength of the Brillouin interaction has a dependence. The isolator 21 is present to prevent the pulse and ASE noise from being fed back to the laser 9.

A reflecting element 23 disposed at the distal end of the sensing fibre 24 is a Faraday Rotating Mirror (FRM).

The sensing fibre 24 used experimentally was approximately 17km in length, and the photo-detector 5 had a bandwidth greater than 100MHz.

In the experiment, in addition to the optical components, control system 1 and signal processing system 4 were employed. The control system 1 included a computer controlled microwave function generator 2 that was capable of producing gated microwave signals in the 10 - 12GHz region. The minimum pulse width of the microwave signal 25 was limited by instrument performance to 200ns, which corresponds to a spatial resolution for the sensor 26 of 20m. Signal sampling and averaging was carried out by a digital storage oscilloscope 6, with a sampling rate of 25MHz. Data was transferred to the computer 8 where signal processing was executed.

The measurement technique that was used is described below.

The computer controlled the frequency output 25 from the microwave signal generator 1 which defined the frequency difference between the pump 12 and probe 11 lightwaves. The frequency was swept through the range containing the Brillouin loss curve, and the entire fibre Brillouin loss profile was measured at each frequency value in an OTDR style time-dependent result. The final results displayed the Brillouin frequency observed at each spatial location along the fibre.

Figure 4 shows a typical final result from the distributed BOTDA sensor. The graph plots the measured Brillouin frequency shift at each location along the sensing fibre length. The sensing fibre in this case consisted of three separate fibre reels, which are identifiable as regions of slightly different Brillouin frequency. This difference is due either to different fibre composition, or different winding strain. The narrow feature at approximately 4.2km demonstrates the spatial resolution of the system. A 30m length of unwound fibre was placed in a freezer at -10°C. The dependence (with positive coefficient) of the Brillouin frequency upon the fibre temperature means that the freezer can be identified as a lower frequency region.

The above embodiments of the present invention have been described by way of example only and various alternative features or modifications from what has been specifically described and illustrated can be made within the scope of the invention, as will be readily apparent to persons skilled in the art.

## Claims

1. Sensing apparatus for sensing a characteristic of an optical fibre including

   a laser source for producing a lightwave;
   wave production means for producing from the lightwave a pump wave and a probe wave;
   frequency sweep means for varying the frequency of one of the pump and probe waves;
   direction means for directing both pump and probe waves into a near end of an optical fibre;
   reflection means for reflecting one of the pump and probe waves at a distal end of the optical fibre;
   detection means for detecting the Brillouin loss or gain produced by an interaction of the pump and probe waves in the fibre in order to sense a characteristic of the fibre.

2. Apparatus according to claim 1 wherein the wave production means includes a power divider.

3. Apparatus according to claim 2 wherein the power divider produces the pump wave and probe wave as separate waves having different wave paths.

4. Apparatus according to claim 2 or claim 3 wherein the power divider is a polarisation maintaining directional coupler.

5. Apparatus according to claim 4 wherein the power divider is a dual output optical switch.

6. Apparatus according to any preceding claim wherein the direction means includes a lightwave combination system for directing the pump and probe waves in different directions.

7. Apparatus according to claim 6 wherein the lightwave combination system is a four port fibre-optic circulator which directs the pump wave and the probe wave into a sensing portion of the optical fibre and which directs the pump wave and the probe wave after Brillouin interaction to the detection means.

8. Apparatus according to claim 7 wherein the lightwave combination system consists of two three port circulators in which port 3 of the first circulator is connected to port 1 of the second circulator.

9. Apparatus according to claim 6 wherein the lightwave combination system consists of two directional couplers in which one port of the first coupler is connected to one port of the second coupler.

10. Apparatus according to any preceding claim wherein the frequency sweep means includes an electro-optic modulator (EOM).

11. Apparatus according to claim 10 wherein the electro-optic modulator operates in the microwave frequency region.

12. Apparatus according to claim 10, wherein the EOM is biased to minimum throughput and is driven with a gated microwave voltage signal to produce an optical pulse shifted to higher frequency than the input lightwave, and a second optical pulse shifted to lower frequency.

13. Apparatus according to claim 12, wherein the magnitude of the frequency shift is equal to the applied microwave frequency.

14. Apparatus according to claim 12 or claim 13, wherein the duration of the optical pulses is equal to the duration of the gated microwave signal.

15. Apparatus according to any one of claims 12 to 14 wherein the sensing apparatus further includes a spectral filter which eliminates one of the frequency shifted pulses.

16. Apparatus according to claim 15 wherein the spectral filter is a fibre Bragg grating.

17. Apparatus according to claim 15 or claim 16, wherein the lower frequency pulse is eliminated by the spectral filter, and the remaining pulse is the pump wave.

18. Apparatus according to claim 15 or claim 16, wherein the higher frequency pulse is eliminated by the spectral filter, and the remaining pulse is the probe wave.

19. Apparatus according to any one of claims 15 to 18, wherein the remaining pulse is combined, using the lightwave combination system as defined in one of claims 6 to 10, with the original lightwave and directed into a length of optical fibre.

20. Apparatus according to any one of claims 4 to 19, wherein both pump and probe waves are amplifiable by at least one erbium doped fibre amplifier (EDFA).

**21.** Apparatus according to claim 20, wherein the pump and probe lightwaves are amplifiable separately by respective EDFAs located in routes not common to both pump or probe waves.

**22.** Apparatus according to any one of claims 19 to 21, wherein a Brillouin interaction occurs in the sensing fibre between the pump and probe lightwaves.

**23.** Apparatus according to any one of claims 12 to 22, wherein the magnitude of the frequency shift is swept through a range of frequencies which contains the Brillouin loss/gain curve of the sensing fibre.

**24.** Apparatus according to Claim 23, wherein the strength of the Brillouin interaction experienced by the lightwave is measured as a function of time, in the manner of a standard optical time domain reflectometer (OTDR).

**25.** Apparatus according to any preceding claim wherein the reflection means is a Faraday rotating mirror.

**26.** A method for sensing a characteristic of an optical fibre including the steps of:

producing a lightwave from a laser source, producing from the lightwave a pump wave and a probe wave,
varying the frequency of one of the pump wave and the probe wave,
directing both pump wave and probe wave into a near end of an optical fibre,
reflecting at a distal end of the optical fibre one of the pump wave and probe wave, and
detecting the Brillouin loss or gain produced by an interaction of the pump and probe waves in the fibre in order to sense a characteristic of the fibre.

**27.** A method according to claim 26 wherein the pump wave and the probe wave are produced by a power divider.

**28.** A method according to claim 27 wherein the power divider produces the pump wave and the probe wave as separate waves having different wave paths.

**29.** A method according to claim 27 or claim 28 wherein the power divider is a polarisation maintaining directional coupler.

**30.** A method according to claim 29 wherein the power divider is a dual output switch.

**31.** A method according to any one of claims 26 to 30 wherein the pump wave and probe wave are directed by a lightwave combination system.

**32.** A method according to claim 31 wherein the lightwave combination system is a four port fibre-optic circulator which directs the pump wave and the probe wave into a sensing portion of the optical fibre and which directs the pump wave and the probe wave after Brillouin interaction to the detection means.

**33.** A method according to claim 32 wherein the lightwave combination system includes two three port circulators in which port 3 of the first circulator is connected to port 1 of the second circulator.

**34.** A method according to claim 32 wherein the lightwave combination system consists of two directional couplers in which one port of the first coupler is connected to one port of the second coupler.

**35.** A method according to any one of claims 26 to 34 wherein the frequency of one of the pump wave and the probe wave is varied by an electro-optic modulator (EOM).

**36.** A method according to claim 35 wherein the EOM is biased to minimum throughput and is driven with a gated microwave voltage signal to produce an optical pulse shifted to higher frequency than the input lightwave, and a second optical pulse shifted to lower frequency.

**37.** A method according to claim 36 wherein the magnitude of the frequency shift is equal to the applied microwave frequency.

**38.** A method according to claim 36 or claim 37 wherein the duration of the optical pulse is equal to the duration of the gated microwave signal.

**39.** A method according to claim 36 to claim 38 wherein one of the frequency shifted pulses is eliminated by a spectral filter.

**40.** A method according to claim 39 wherein the spectral filter is a fibre Bragg grating.

**41.** A method according to claim 39 or claim 40 wherein the lower frequency pulse is eliminated by the spectral filter, and the remaining pulse is the pump lightwave.

**42.** A method according to claim 39 or claim 40 wherein the higher frequency pulse is eliminated by the spectral filter, and the remaining pulse is the probe lightwave.

**43.** A method according to any one of claims 39 to 42 wherein the remaining pulse is combined, using the lightwave combination system as defined in claims 6 to 9, with the original light wave and directed into a length of optical fibre.

**44.** A method according to any one of claims 28 to 43 wherein both probe and pump lightwaves can be amplified by erbium doped fibre amplifiers (EDFAs).

**45.** A method according to claim 44 wherein the pump and probe lightwaves can be amplified separately by placement of EDFAs in routes not common to both lightwaves.

**46.** A method according to any one of claims 43 to 45 wherein a Brillouin interaction occurs in the sensing fibre between the pump and probe lightwaves.

**47.** A method according to any one of claims 35 to 46 wherein the magnitude of the frequency shift is swept through a range of frequencies which contains the Brillouin loss/gain curve of the sensing fibre.

**48.** A method according to any one of claims 43 to 46 wherein the lightwave is directed by the lightwave combination system as defined in any one of claims 6 to 8 to a photo-detector.

**49.** A method according to claim 47 or 48 wherein the strength of the Brillouin interaction experienced by the cw lightwave is measured as a function of time, in the manner of a standard optical time domain reflectometer (OTDR).

**50.** A method according to any one of claims 26 or 48 wherein one of the pump wave and probe wave is reflected by a Faraday rotating mirror.

**51.** Sensing apparatus for sensing a characteristic of an optical fibre substantially as herein described with reference to Figures 2 to 5.

**52.** A method for sensing a characteristic of an optical fibre substantially as herein described with reference to Figures 2 to 5.

FIG. 1

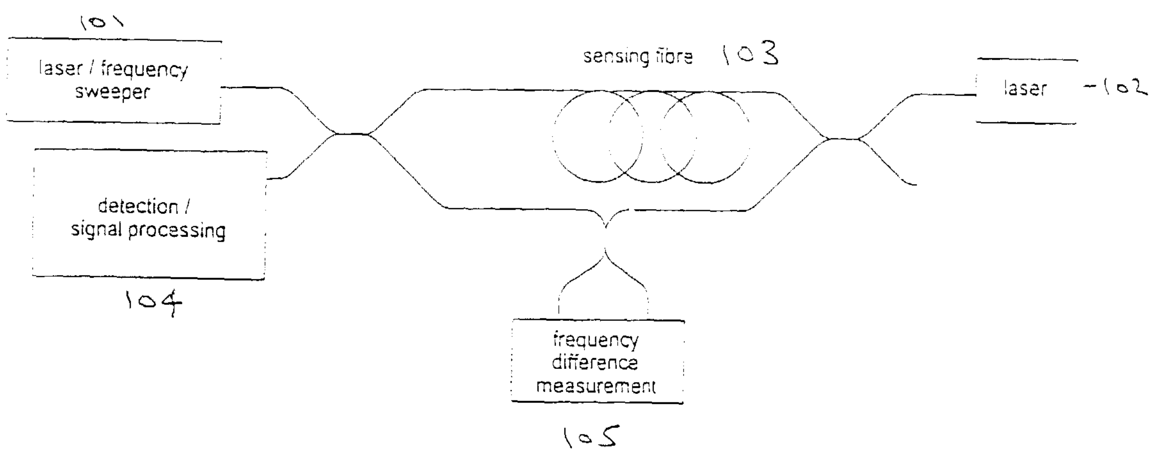
101
laser / frequency sweeper
sensing fibre 103
laser 102
detection / signal processing
104
frequency difference measurement
105

FIG. 2

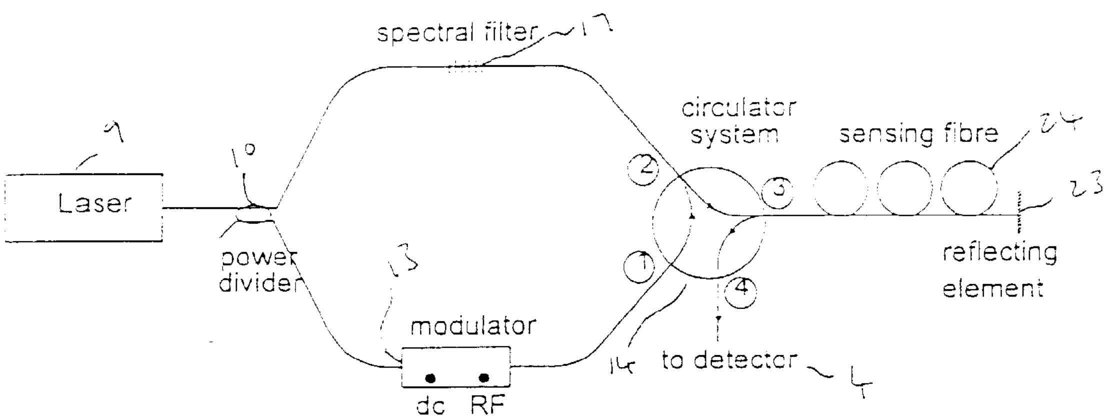
spectral filter
17
circulator
system
sensing fibre
24
9
10
Laser
2
3
23
power
divider
1
4
reflecting
element
13
modulator
14
to detector
4
dc
RF

FIG. 3

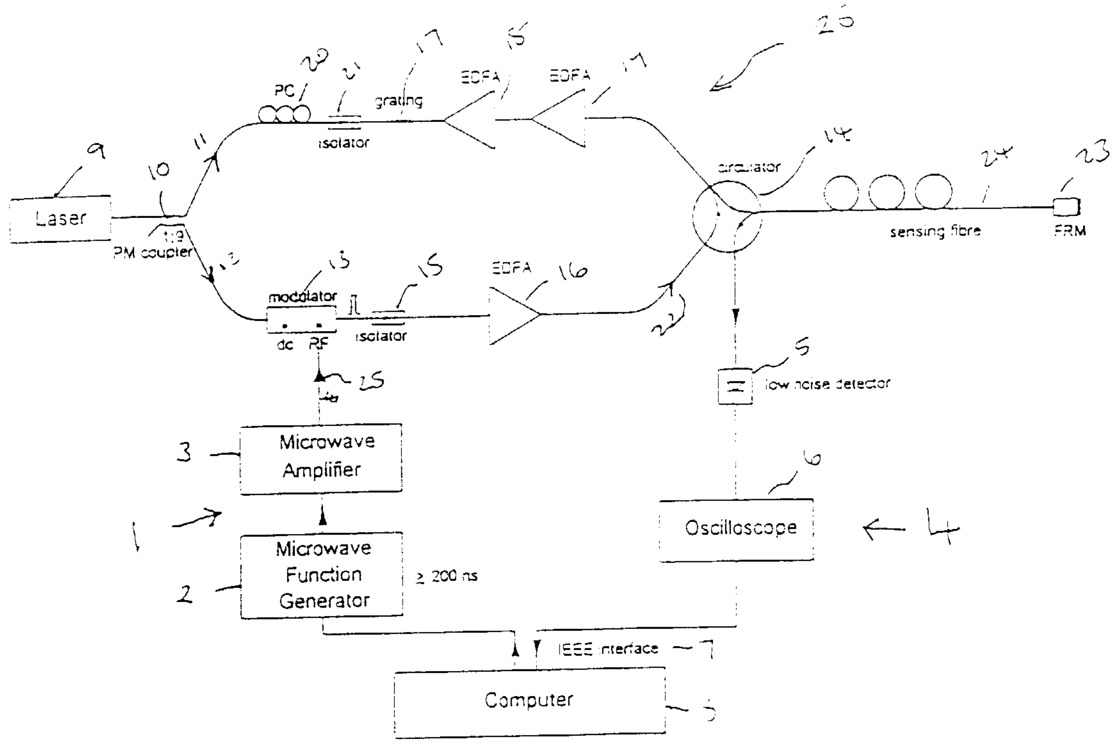
Laser
1:9
PM coupler
PC
isolator
grating
EDFA
EDFA
circulator
sensing fibre
FRM
modulator
dc
RF
isolator
EDFA
low noise detector
Microwave
Amplifier
Microwave
Function
Generator
≥ 200 ns
Oscilloscope
IEEE interface
Computer

FIG. 4

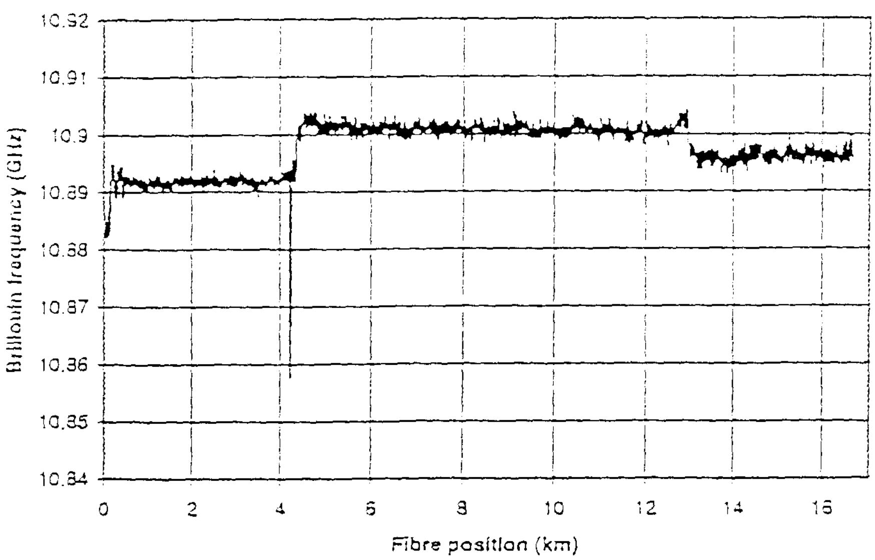
10.92
10.91
10.9
10.89
10.88
10.87
10.86
10.85
10.84
Brillouin frequency (GHz)
0
2
4
6
8
10
12
14
16
Fibre position (km)

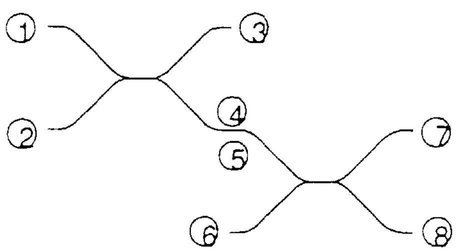


FIG. 5

European Patent Office

# EUROPEAN SEARCH REPORT

Application Number
EP 98 30 7663

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 017, no. 699 (P-1665), 21 December 1993 & JP 05 240699 A (NIPPON TELEGR & TELEPH CORP), 17 September 1993 * abstract * --- | 1,7,8, 20-24,26 | G01M11/00 |
| A | DATABASE INSPEC INSTITUTE OF ELECTRICAL ENGINEERS, STEVENAGE, GB Inspec No. 5461878, IZUMITA H ET AL: "Brillouin OTDR employing optical frequency shifter using side-band generation technique with high-speed LN phase-modulator" XP000679545 * page 732, left-hand column, line 1 - page 733, right-hand column * & IEEE PHOTONICS TECHNOLOGY LETTERS, DEC. 1996, IEEE, USA, vol. 8, no. 12, pages 1674-1676, ISSN 1041-1135 --- | 1-5, 10-15 | TECHNICAL FIELDS SEARCHED (Int.Cl.6) |
| A | DATABASE INSPEC INSTITUTE OF ELECTRICAL ENGINEERS, STEVENAGE, GB Inspec No. 4732867, SHIMIZU K ET AL: "Coherent self-heterodyne Brillouin OTDR for measurement of Brillouin frequency shift distribution in optical fibers" XP000480094 * abstract * & JOURNAL OF LIGHTWAVE TECHNOLOGY, MAY 1994, USA, vol. 12, no. 5, pages 730-736, ISSN 0733-8724 ----- | 1 | G01M |

The present search report has been drawn up for all claims

| Place of search | Date of completion of the search | Examiner |
|---|---|---|
| THE HAGUE | 3 February 1999 | Mucs, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)